Europäisches Patentamt

European Patent Office

Office européen des brevets

(11) Veröffentlichungsnummer: **0 356 553**
**A1**

## (12) EUROPÄISCHE PATENTANMELDUNG

(21) Anmeldenummer: **88114212.9**

(51) Int. Cl.5 **B29D 30/54**

(22) Anmeldetag: **31.08.88**

(43) Veröffentlichungstag der Anmeldung:
**07.03.90 Patentblatt 90/10**

(84) Benannte Vertragsstaaten:
**AT BE CH DE ES FR GB IT LI NL**

(71) Anmelder: **Banzer, Richard**
**Reberle 21**
**FL-9494 Schaan(LI)**

(72) Erfinder: **Banzer, Richard**
**Reberle 21**
**FL-9494 Schaan(LI)**

(74) Vertreter: **Riederer Freiherr von Paar zu**
**Schönau, Anton et al**
**Van der Werth, Lederer & Riederer Freyung**
**615 Postfach 2664**
**D-8300 Landshut(DE)**

(54) **Anpressvorrrichtung.**

(57) Eine Vorrichtung zum dichtenden Anpressen einer·elastischen, etwa U-förmigen Querschnitt aufweisenden Außenhülle an die Außenflächen der Wulste eines durch Vakuum-Vulkanisation rundzuerneuernden Fahrzeugreifens (4) weist einen an die Außenfläche des Wulstes anzulegenden Ring (8) auf, der mit einem zentralen Tragkörper (5) über speichenartige Zwischenstücke (6) verbunden ist, entlang denen mindestens drei sektorförmige ÜSpannplatten (13) radial verschiebbar sind, die gegen die Innenfläche des Wulstes (3) schwenk- und anpreßbar sind, und in dieser verschwenkten und angepreßten Stellung einen geringen Abstand voneinander aufweisen. Hierdurch kann der Energieverbrauch zum Vulkanisieren niedrig gehalten und einer Verformung der Außenhülle vorgebeugt werden.

Fig.3

Xerox Copy Centre

## Anpreßvorrichtung

Die Erfindung bezieht sich auf eine Vorrichtung zum dichtenden Anpressen einer elastischen, etwa U-förmigen Querschnitt aufweisenden Außenhülle an die Außenflächen der Wulste eines durch Vakuum-Vulkanisation rundzuerneuernden Fahrzeugreifens, bestehend aus einem an der Außenfläche des Wulstes anliegenden Ring.

Bei der Runderneuerung von Fahrzeugreifen wird zunächst die verbrauchte Lauffläche abgeschält und anschließend eine neue Lauffläche aufgebracht. Diese wird dann durch Vakuum-Vulkanisation mit der Karkasse verbunden. Für die Vakuum-Vulkanisation ist es dann erforderlich, daß der zu vulkanisierende Bereich dichtend abgeschlossen und die dort befindliche Luft abgesaugt wird. Dazu wird zunächst ein Schlauch in den Fahrzeugreifen eingebracht. Anschließend wird eine Außenhülle aus elastischem Werkstoff über den Fahrzeugreifen gestülpt, die U-förmigen Querschnitt aufweist und sich über den Wulst des Fahrzeugreifens erstreckt. Sodann wird eine besonders ausgebildete Felge in den Fahrzeugreifen eingesetzt, die aus zwei ringförmigen, miteinander verriegelbaren Hälften besteht. Vor dem Einsetzen der Felge wird auf den Außenflächen der beiden Wulste jeweils ein Ring zum Anliegen gebracht, der mit dem äußeren Rand der Felge zur Abstützung des Wulstes zusammenwirkt. Nach dieser Vorarbeit wird der im Fahrzeugreifen befindliche Schlauch aufgepumpt. Dies führt dazu, daß der Wulst gegen die Außenhülle gedrückt und dabei jeweils der Spalt zwischen dem Wulst und der Außenhülle abgedichtet wird. Anschließend wird über ein in der Außenhülle eingesetztes Ventil die zwischen der Außenhülle und dem Fahrzeugreifen befindliche Luft abgesaugt. Danach wird dieser Fahrzeugreifen, meist zusammen mit weiteren Fahrzeugreifen, in einen Autoklav eingehängt, in welchem dann unter Überdruck und bei vorgegebener Temperatur der Vulkanisationsvorgang erfolgt. Die beschriebene Vorrichtung zum dichtenden Anpressen der elastischen Außenhülle an die Außenfläche der Wulste hat den Vorteil, daß einerseits der freie Querschnitt im Wulst keinerlei Verformung erfährt und andererseits die Außenhülle wenig beansprucht wird, was zu einer verhältnismäßig hohen Lebensdauer derselben beiträgt. Der Nachteil dieser Vorrichtung besteht darin, daß die gesamte Felge einschließlich der im Schlauch des Fahrzeugreifens befindlichen Luft auf die Vulkanisationstemperatur erwärmt werden muß, was einerseits einen erhöhten Energieverbrauch bedingt und andererseits eine längere Aufheizzeit erforderlich macht.

Um diesen Nachteil zu vermeiden, ist es bekannt, die Außenhülle so groß auszubilden, daß sie sich noch in axialer Richtung über die gesamte Breite der beiden Wulste des Fahrzeugreifens erstrecken kann. Sodann wird in den Fahrzeugreifen im Bereich jedes Wulstes ein profilierter, elastischer Dichtring eingesetzt, dessen Außendurchmesser im Dichtbereich etwa gleich dem Innendurchmesser der Wulste ist. In diesem Dichtring wird dann ein besonderer, metallischer Spannring eingesetzt, dessen Umfang über einen Exzenter vergrößerbar ist. Durch diesen Spannring wird der Dichtring aufgeweitet und drückt die Außenhülle in radialer Richtung gegen den jeweiligen Wulst, so daß auch hier eine Dichtung zwischen der Außenhülle und den beiden Wulsten stattfindet. Diese bekannte Dichtvorrichtung hat jedoch den Nachteil, daß die Außenhülle für eine vorgegebene Reifengröße größer sein muß und durch das radiale Anpressen gegen die Wulste so stark verformt wird, daß die Lebensdauer der Außenhülle bzw. die Anzahl der Verwendungen der Außenhülle erheblich zurückgeht. Zusätzlich besteht hier die Gefahr, daß sich die Wulste durch die Spannringe in unerwünschter Weise verformen können, was sich nicht nur nachteilig für den Fahrzeugreifen, sondern auch auf dessen Montage auf die Felge auswirken kann.

Der Erfindung liegt deshalb die Aufgabe zugrunde, eine Vorrichtung zum dichtenden Anpressen einer elastischen, etwa U-förmigen Querschnitt aufweisenden Außenhülle an die Außenflächen der Wulste eines durch Vakuum-Vulkanisation rundzuerneuernden Fahrzeugreifens zu schaffen, die einerseits sicherstellt, daß der Energieverbrauch für die Erwärmung auf die Vulkanisationstemperatur gering und die Aufheizzeit möglichst kurz gehalten wird, und bei der andererseits keine unerwünschte Verformung der Wulste eintritt und die Außenhülle bei geringem Materialverbrauch so gering wie möglich verformt wird, so daß die Außenhülle sehr oft für einen Vulkanisationsvorgang verwendet werden kann.

Zur Lösung dieser Aufgabe wird gemäß der Erfindung bei einer Vorrichtung der eingangs beschriebenen Gattung vorgeschlagen, daß der Ring über speichenartige Zwischenstücke mit einem zentralen Tragkörper verbunden ist und daß mindestens drei sektorförmige Spannplatten vorgesehen sind, die radial verschiebbar und gegen die Innenfläche des Wulstes schwenk- und anpreßbar sind und die in der Spannstellung einen geringen Abstand voneinander aufweisen.

Durch eine solche Vorrichtung wird die Außenhülle an den Außenflächen der Wulste dichtend zum Anliegen gebracht, wobei keine sehr große Verformung der Wulste eintritt. Der Materialverbrauch für die Außenhülle kann sehr gering sein. Die Vorrichtung besitzt verhältnismäßig wenig Werkstoff, der bei der Vulkanisation aufgeheizt werden muß. Der Innenraum des Fahrzeugreifens ist frei zugänglich und ein Schlauch ist nicht erforderlich. Daher befindet sich im Fahrzeugreifen auch keine besondere Luft, die zusätzlich aufgeheizt werden müßte.

Weitere Merkmale einer Vorrichtung gemäß der Erfindung sind in den Ansprüchen 2 bis 15 offenbart.

Die Erfindung wird nachfolgend anhand eines in einer Zeichnung dargestellten Ausführungsbeispiels näher erläutert. Dabei zeigen

Fig. 1 eine Draufsicht auf eine Vorrichtung gemäß der Erfindung,

Fig. 2 einen unter 45° verlaufenden Schnitt durch die Vorrichtung nach Fig. 1 und

Fig. 3 die Vorrichtung nach den Fign. 1 und 2 im montierten Zustand.

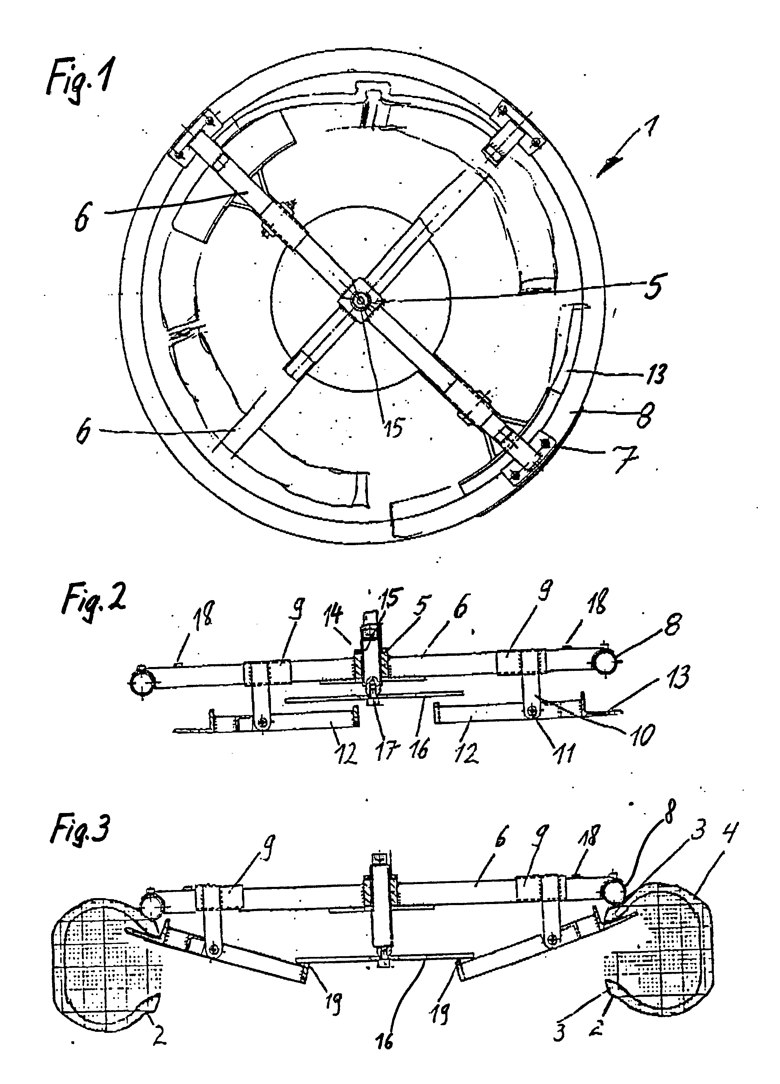

In den Fign. 1 bis 3 der Zeichnung ist eine Vorrichtung 1 gezeigt, die zum dichtenden Anpressen einer elastischen, etwa U-förmigen Querschnitt aufweisenden Außenhülle an die Außenflächen 2 der Wulste 3 eines durch Vakuum-Vulkanisation rundzuerneuernden Fahrzeugreifens 4 dient. Diese Vorrichtung besteht in diesem Ausführungsbeispiel aus einem zentralen Tragkörper 5, der quadratischen Querschnitt aufweist. An jede Seitenfläche des Tragkörpers 5 schließt sich in diesem Beispiel ein speichenartiges Zwischenstück 6 an, d.h., an den Tragkörper 5 sind in diesem Ausführungsbeispiel vier speichenartige Zwischenstücke 6 angeschlossen. In Abänderung dieses Ausführungsbeispiels ist es dabei möglich, auch drei speichenartige Zwischenstücke 6 vorzusehen, die in gleichem Winkel zueinander angeordnet sind. Die maximale Anzahl der Zwischenstücke 6 dürfte bei etwa acht liegen.

Alle speichenartigen Zwischenstücke 6 sind an ihrem äußeren Ende, beispielsweise über eine Lasche 7, mit einem Ring 8 verbunden, der in diesem Ausführungsbeispiel aus einem Rohr geformt ist. Die speichenartigen Zwischenstücke 6 sind beispielsweise aus Vierkantrohr gefertigt und nehmen jeweils einen Schlitten 9 auf, der in diesem Ausführungsbeispiel aus einer Vierkanthülse besteht und in radialer Richtung auf dem speichenartigen Zwischenstück 6 verschoben werden kann. Jeder Schlitten 9 trägt an zwei sich gegenüberliegenden Außenflächen jeweils eine Strebe 10, die parallel mit Abstand zueinander verlaufen und an ihren Enden jeweils eine Bohrung 11 besitzen. Zwischen den beiden Streben 10 ist ein Doppelhebel 12 angeordnet, der auf einer in den Bohrungen 11 einsteckbaren Achse schwenkbar ist.

Alle Doppelhebel 12 tragen an ihrem äußeren Ende eine sektorförmige Spannplatte 13, die in diesem Ausführungsbeispiel L-förmigen Querschnitt besitzt. Dabei ist der kürzere Schenkel dieser Spannplatte 13 mit dem Doppelhebel 12 verbunden. Um den Raum zwischen den beiden Streben 10 voll ausfüllen zu können, besteht der Doppelhebel 12 entweder aus zwei mit Abstand voneinander angeordneten und über Versteifungsstreben miteinander verbundenen Hebelteilen oder ist in ähnlicher Weise wie die speichenartigen Zwischenstücke 6 aus Vierkantrohr gebildet.

Der Tragkörper 5 weist eine Bohrung 14 auf, die beispielsweise mit Trapezgewinde versehen ist. In diese Bohrung 14 ist eine Spindel 15 eingedreht, die an ihrem dem Doppelhebel 12 zugewandten Ende eine Scheibe 16 trägt. Die Scheibe 16 kann beispielsweise über eine Schraube 17 fest mit der Spindel 15 verbunden sein. Es ist jedoch vorteilhaft, wenn die Scheibe 16 gelenkig an die Spindel 15 angeschlossen ist. Dadurch wird eine geringfügige Pendelbewegung der Scheibe 16 erreicht.

Bei dem Einsatz der Vorrichtung 1 nehmen alle Schlitten 9 ihre dem Tragkörper 5 zugewandte Endstellung ein, wie dies in Fig. 1 bei drei Schlitten 9 und in Fig. 2 bei dem linken Schlitten 9 gezeigt ist. In dieser Stellung der Schlitten 9 wird die Vorrichtung 1 auf einen für eine Runderneuerung zu vulkanisierenden Fahrzeugreifen 4 aufgesetzt. Dieser Fahrzeugreifen 4 ist mit einer an sich bekannten, elastischen, etwa U-förmigen Querschnitt aufweisenden Außenhülle versehen, die zur besseren Darstellung in der Fig. 3 nicht eingezeichnet ist und die sich in radialer Richtung etwa bis zur äußeren Innenkante der Wulste 3 erstreckt. Der Ring 8 hat einen Durchmesser, der auf den zu vulkanisierenden Fahrzeugreifen 4 abgestimmt und so groß bemessen ist, daß der Ring 8 sicher in einer Mulde im Bereich des Wulstes 3 anliegt. Sobald der Ring 8 die in Fig. 3 gezeigte Lage einnimmt, werden alle Schlitten 9, beispielsweise von Hand, auf den speichenartigen Zwischenstücken 6 nach außen bewegt und zwar so weit, bis sie an einem auf jedem Zwischenstück 6 angeordneten Anschlag 18 anliegen. Dabei entspricht die Lage der Anschläge 18 der Lage der Spannplatten 13 gemäß Fig. 3. In der Fig. 1 ist ein Schlitten 9 und in Fig. 2 ist der rechte Schlitten 9 in dieser Endlage gezeigt.

Nun wird die Spindel 15 so gedreht, daß sie sich in Richtung auf die Doppelhebel 12 bewegt. Zu diesem Zweck kann die Spindel 15 beispielsweise einen Innensechskant aufweisen, in den ein Sechskant-Werkzeug einsteckbar ist. Dieses Sechskant-Werkzeug ist beispielsweise in das Spannfutter einer Bohrmaschine eingesetzt, so daß die Spindel 15 maschinell gedreht werden kann. Bei der vorbeschriebenen Bewegung kommt die Scheibe 16 an den inneren Enden der Doppelhebel 12 zunächst zum Anliegen. Bei der weiteren Bewegung der Spindel 15 werden die Doppelhebel 12 in die Lage gemäß Fig. 3 geschwenkt. In dieser Lage ist der Wulst 3 des Fahrzeugreifens 4 zwischen dem Ring und den Spannplatten 13 fest eingespannt. Durch die gelenkartige Verbindung der Scheibe 16 mit der Spindel 15 können geringfügige Toleranzen ausgeglichen werden. Diese gelenkige Anordnung stellt darüber hinaus sicher, daß alle Spannplatten 13 mit etwa gleich großer Kraft gegen den Wulst 3 drücken. Damit ist die Außenhülle zwischen dem Wulst 3 und dem Ring 8 eingespannt und dichtet den Spalt zwischen der Außenhülle und dem Wulst 3 für die Anlegung eines Vakuums ab.

Die Länge bzw. das Winkelmaß der Spannplatten 13 ist so groß ausgebildet, daß sich dieselben bei der inneren Lage der Schlitten 9 nicht berühren. Das bedeutet aber, daß die Spannplatten 13 in ihrer Spannstellung gemäß Fig. 3 einen geringen Abstand voneinander aufweisen. Um sicherzustellen, daß die Scheibe 16 bei ihrer Bewegung leicht über die Doppelhebel 12 gleiten kann, ist jeder Doppelhebel 12 an seinem inneren Ende mit einer beispielsweise halbkugelartigen Erhöhung 19 versehen. Nachdem die Vorrichtung 1 in der vorbeschriebenen Weise an den Fahrzeugreifen 4 angebracht und damit die Außenhülle dichtend an den Wulst 3 angepreßt wurde, wird an der anderen Seite des Fahrzeugreifens 4 ebenfalls eine derartige Vorrichtung 1 angebracht, die hier die Außenhülle dichtend gegen den anderen Wulst 3 anpreßt. Diese zweite Vorrichtung ist jedoch in der Zeichnung nicht gezeigt. Dabei sind die Vorrichtungen 1 so ausgebildet, daß sie sich gegenseitig nicht behindern. Bedarfsweise sind die Doppelhebel 12 der einander gegenüberliegenden Vorrichtungen 1 um einen Winkel von etwa 45° gegeneinander versetzt angeordnet.

Nach dem Vulkanisationsvorgang werden die Vorrichtungen 1 durch gegenläufiges Drehen der Spindeln 15 und entsprechende Verschiebung der Schlitten 9 wieder vom Fahrzeugreifen 4 entfernt.

In Abänderung des erläuterten Ausführungsbeispieles ist es möglich, den Ring 8 mit einem anderen Profil zu versehen. Dabei muß jedoch sichergestellt sein, daß die an dem Wulst 3 anliegende Fläche konvex ausgebildet ist. Bedarfsweise kann dem Schlitten 9 ein Verschiebeantrieb zugeordnet sein. Im Hinblick auf den Vulkanisationsvorgang sollte derselbe jedoch möglichst mechanisch ausgebildet sein. Ferner kann die Scheibe 16 in Abänderung des erläuterten Ausführungsbeispiels durch einen Kreuzhebel ersetzt werden, der beispielsweise Schlitze aufweist, in denen jeweils ein entsprechender Stift eines Doppelhebels 12 geführt ist.

## Ansprüche

1. Vorrichtung zum dichtenden Anpressen einer elastischen, etwa U-förmigen Querschnitt aufweisenden Außenhülle an die Außenflächen der Wulste eines durch Vakuum-Vulkanisation rundzuerneuernden Fahrzeugreifens, mit einem an der Außenfläche des Wulstes anzulegenden Ring, dadurch gekennzeichnet, daß der Ring (8) über speichenartige Zwischenstücke (6) mit einem zentralen Tragkörper (5) verbunden ist und daß mindestens drei sektorförmige Spannplatten (13) radial verschiebbar und gegen die Innenfläche des Wulstes (3) schwenkund anpreßbar sind, die in dieser verschwenkten und angepreßten Stellung einen geringen Abstand voneinander aufweisen.

2. Vorrichtung nach Anspruch 1, dadurch gekennzeichnet, daß der Ring (8) an seiner dem Wulst (3) zugewandten Fläche einen konvexen Querschnitt besitzt.

3. Vorrichtung nach Anspruch 2, dadurch gekennzeichnet, daß der Ring (8) aus einem Rohr gebildet ist.

4. Vorrichtung nach einem der Ansprüche 1 bis 3, dadurch gekennzeichnet, daß die Spannplatten (13) am Tragkörper (5) angeordnet sind.

5. Vorrichtung nach einem der Ansprüche 1 bis 3, dadurch gekennzeichnet, daß die Spannplatten (13) an den speichenartigen Zwischenstücken (6) angeordnet und entlang diesen verschiebbar sind.

6. Vorrichtung nach einem der Ansprüch 1 bis 5, dadurch gekennzeichnet, daß die Spannplatten (13) an einem Ende eines schwenkbar gelagerten Doppelhebels (12) befestigt sind.

7. Vorrichtung nach Anspruch 6, dadurch gekennzeichnet, daß die Lagerung des Doppelhebels (12) an einem auf einem speichenartigen Zwischenstück (6) verschiebbar gelagerten Schlitten (9) ausgebildet ist.

8. Vorrichtung nach einem der Ansprüche 1 bis 7, dadurch gekennzeich net, daß den Spannplatten (13) bzw. dem Schlitten (9) ein Verschiebeantrieb zugeordnet ist.

9. Vorrichtung nach einem der Ansprüche 1 bis 8, dadurch gekennzeichnet, daß jeder Spannplatte (13) ein Schwenkantrieb zugeordnet ist.

10. Vorrichtung nach einem der Ansprüche 1 bis 8, dadurch gekennzeichnet, daß allen Spannplatten (13) ein gemeinsamer Schwenkantrieb (14, 15, 16) zugeordnet ist.

11. Vorrichtung nach Anspruch 10, dadurch gekennzeichnet, daß der Schwenkantrieb (14, 15, 16) durch eine axial zum Ring (8) bzw. Tragkörper (5) bewegbare Scheibe (16) gebildet ist.

12. Vorrichtung nach Anspruch 11, dadurch gekennzeichnet, daß die Scheibe (16) mit einer im Tragkörper (5) gelagerten Spindel (15) verbunden ist.

13. Vorrichtung nach Anspruch 12, dadurch gekennzeichnet, daß die Scheibe (16) gelenkig mit der Spindel (15) verbunden ist.

14. Vorrichtung nach einem der Ansprüche 1 bis 13, dadurch gekennzeichnet, daß jedem Schlitten (9) in der verschwenkten und angepreßten Stellung der Spannplatten (13) ein Anschlag (18) zugeordnet ist.

15. Vorrichtung nach einem der Ansprüche 1 bis 14, dadurch gekennzeichnet, daß jede Spannplatte (13) L-förmigen Querschnitt aufweist.

Fig.1

Fig.2

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| E | EP-A-0 286 692 (JAWE AKTIEBOLAG) <br> --- | 1-15 | B 29 D 30/54 |
| Y | US-A-4 600 467 (T. PERDUE) <br> --- | 1 | |
| Y | US-A-2 951 725 (R. ST. JEAN) | 4,6,10-14 | |
| A | | 2,3 | |
| | --- | | |
| A | US-A-4 242 169 (W. DEHAVEN) <br> --- | 2,3 | |
| A | US-A-4 274 897 (C. BAREFOOT) <br> ----- | 1 | |

RECHERCHIERTE
SACHGEBIETE (Int. Cl.4)

B 29 D
B 66 C

Der vorliegende Recherchenbericht wurde für alle Patentansprüche erstellt

| Recherchenort | Abschlußdatum der Recherche | Prüfer |
|---|---|---|
| DEN HAAG | 24-04-1989 | DECLERCK J.T. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
................................................................................
& : Mitglied der gleichen Patentfamilie, übereinstimmendes
    Dokument

EPO FORM 1503 03.82 (P0403)